Europäisches Patentamt

European Patent Office

Office européen des brevets

(19)

(11) **EP 1 160 660 A1**

(12) **EUROPEAN PATENT APPLICATION**

(43) Date of publication:
**05.12.2001 Bulletin 2001/49**

(51) Int Cl.[7]: **G06F 7/68**

(21) Application number: **00830397.6**

(22) Date of filing: **02.06.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **STMicroelectronics S.r.l.**
**20041 Agrate Brianza (Milano) (IT)**

(72) Inventor: **Bardelli, Roberto**
**22073 Fino Mornasco (Co) (IT)**

(74) Representative: **Mittler, Enrico**
**c/o Mittler & C. s.r.l.,**
**Viale Lombardia, 20**
**20131 Milano (IT)**

(54) **Method for the uniform distribution of additional signal clocks**

(57) The present invention relates a method for the subdivision of a period ($T_c$) for the uniform distribution of additional signal clocks, characterised in that it comprises a plurality of steps wherein a number ADJ of signal clocks are added every $2^i$ subperiods in function of the most significant bit in said vector (ADJ) and in function of the least significant bit in said counter (AC).

Fig.4

**Description**

The present invention relates to a method for the uniform distribution of additional signal clocks.

The period subdivision in subperiods can be a demand for numerous applications. This is the case, for example, of a brushless motor.

A brushless motor is a synchronous motor, the rotation of which is obtained by a current commutation in the windings in a synchronous way according to the rotor position. It is necessary, therefore, to know exactly the rotor position to obtain the best accuracy in the motor working, and this position usually is deduced according two approaches: 1) by Hall effect position sensors; 2) by a counter-electromotive force signal (BEMF).

In this last driving choice the position information is completely stored in the BEMF's signal, i.e., in the case we have the maximum BEMF we want to impose a maximum torque, in the case we have the zero BEMF we want to impose a zero torque, and when we have a positive and/or negative BEMF we want to impose a positive and/or negative torque, and therefore in order to drive multiphase brushless motors we have to excite the motor's phases with voltage waveforms that are shifted 360/n degrees out of phase each other, where n is the number of phase. For example, in a three phase brushless motor, therefore, we have that the voltage waveforms are shifted 360/3 = 120 degrees out of phase each other and said waveforms are subdivided in a number of samples giving a step waveform able to approximate the driving waveform.

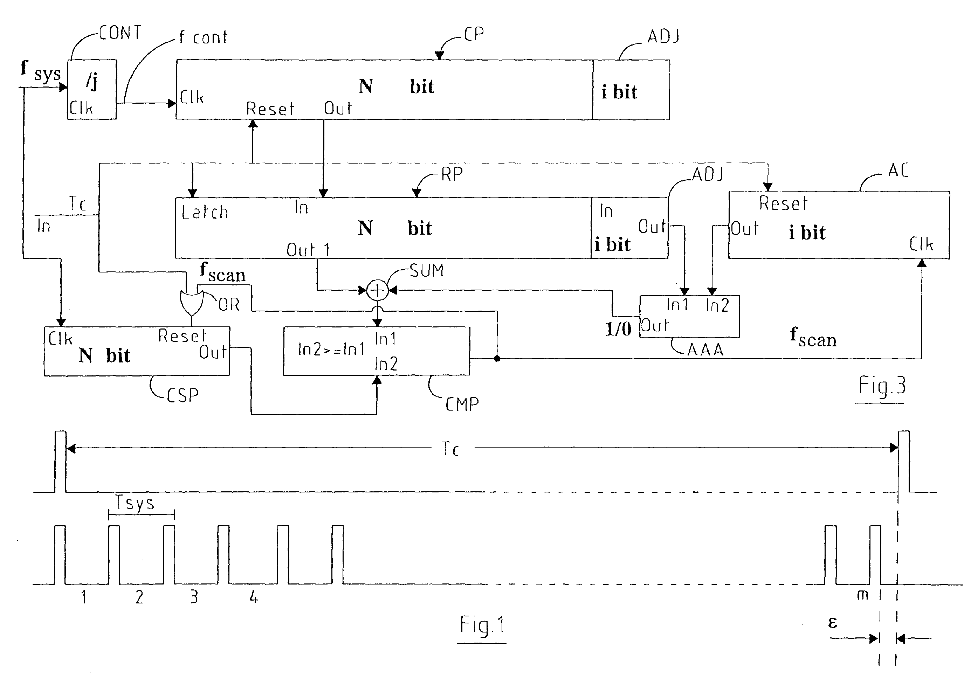

In Figure 1 a period time division in subperiods is shown.

As shown in such figure we note a first axis of abscissa describing a time dependent period signal $T_c$ and a second axis of abscissa describing a time division of said period $T_c$ in subperiods. The $T_c$ signal points out a digital signal having period $T_c$, suitably deduced from BEMF. The difference between period $T_c$ and the subperiods $m * T_{sys}$ generates what commonly known as period reproduction error and in the particular case we have an error s defined by the formula:

$$\varepsilon = T_c - m * T_{sys} * INT[INT(T_c / T_{sys})/m]$$

with $\varepsilon$ in a value range $0<\varepsilon<m \, T_{sys}$, where INT(num) is a function that rounds a number down to the nearest integer.

In a steady state, the signal period $T_c$ of the signal is time independent and the error $\varepsilon$ committed during the period reproduction $T_c$ and the reproduced period $m * T_{sys}$, therefore formed by m subperiods, is a circuit evaluation parameter, that makes the measurement of the period $T_c$.

Therefore the goodness of the approximation, i.e., the possible range of values among which the error scan change, of the motor driving waveform, waveform that changes in function of the connected loads, is a qualitative and quantitative parameter of the circuit and controlling method thereof.

In view of the state of the art described, it is an object of the present invention to estimate the period of a particular waveform by a fixed frequency timing signal and to reproduce said period by approaching subperiods as equal as possible to each other.

According to the present invention, such object is achieved by a method for the uniform distribution of additional signals clock, comprising the following steps:

> a1) associating a binary number to every subperiod in a period;
> b1) establishing the signals clock number to be added to the subperiods inside a period;
> c1) evaluating the most significant bit in a vector;
> d1) evaluating the least significant bit in a counter;
> e1) adding the signal clock to the half of subperiods if the most significant bit in said vector is equal to 1 and if the least significant bit in said counter is equal to 0.

Such object is achieved by a method comprising the further following steps:

> a2) evaluating the second most significant bit in said vector;
> b2) evaluating the least significant bit and the second least significant bit in said counter;
> c2) adding the signal clock to the quarter of subperiods, not contemplated in the step e1), if the second most significant bit in said vector is 1, if the least significant bit in said counter is 1 and if the second least significant bit in said counter is equal to 0.

Thanks to the present invention it is possible to make a frequency multiplier circuit and a method using above circuit for a period time division, for a brushless motor, able to reproduce the motor driving voltage waveform with an accuracy such to produce a reproduction error as little as possible, making possible to improve the phase relationship between the applied profile and the motor position.

The features and the advantages of the present invention will be made evident by the following detailed description of an embodiment, thereof which is illustrated as not limiting example in the annexed drawings, wherein:

> Figure 1 shows a division period in submultiple subperiods;
> Figure 2 shows a frequency multiplier circuit for a brushless motor;
> Figure 3 shows a frequency multiplier circuit for a brushless motor according to the present invention;
> Figure 4 shows a flow chart of an embodiment of a circuit block illustrated in Figure 3;

Figure 5 shows a sketched embodiment of the flow chart illustrated in Figure 4.

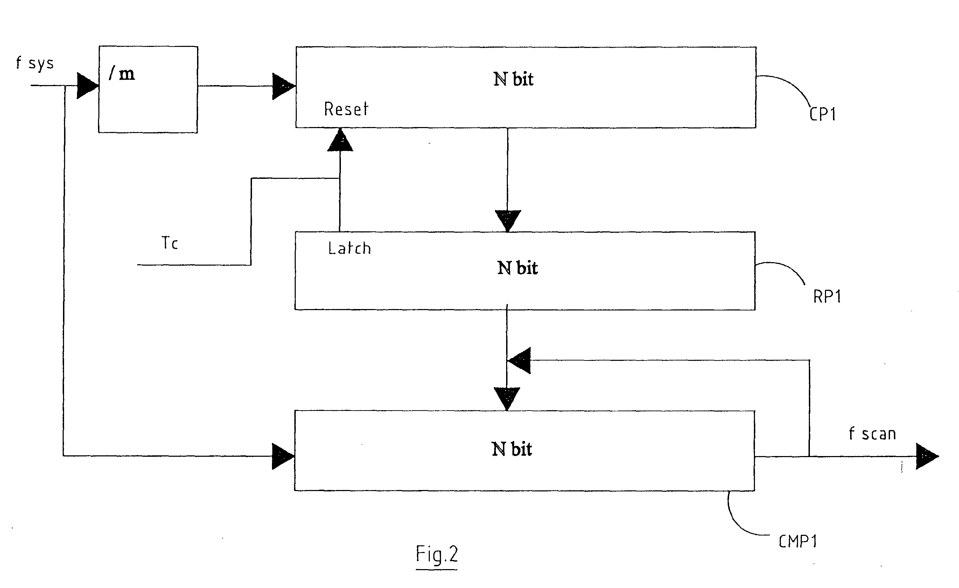

In the embodiments shown in Figures 2, 3, 4 e 5 hereinafter described we refer by way of example to circuits particularly for DC brushless three-phase motors, but the invention is for general purpose circuits adapted for the time division of a time variable period in a plurality of subperiods with a reproduction error of the period thereof as little as possible.

In Figure 2 a possible embodiment is shown in the case we want sampling the waveform to be applied to the phases of the three phase brushless motor (n=3) and to subdivide it in a number of samples m, with m a multiple of the phase numbers, obtaining a step waveform able to approximate the driving waveform.

This kind of embodiment consists in the use of a timing signal at a fixed frequency $f_{sys} = 1 / T_{sys}$ higher than the motor electrical frequency $f_c = 1 / T_c$, changing in function of the working conditions, and in counting the period length using a N bit counter called CP1, timed by a signal obtained dividing the fixed frequency signal $f_{sys}$ for the number m of parts in which the motor electrical period $T_c$ is to be subdivided, as shown in figure 1. A pin Reset resets the counter CP1, every period $T_c$.

Once the appropriate counting is obtained, referring to the previous period, the result is stored in a period register RP1 that is refreshed with the value $T_c$, by a pin Latch. The content of said period register RP1 is examined by a comparator CMP1 with a counter timed at frequency $f_{sys}$. The signals, formed by said CMP1, make a scanning frequency $f_{scan}$ that is a frequency m - times higher than the indicative signal of the period $T_c$.

The actual counting in the counter CP1, at every end of the period $T_c$, is defined by the formula $p = INT [INT(T_c/T_{sys})/m]$, and the following period is subdivided by a counter that counts p - times the period $T_{sys}$ obtaining that every subperiod remains, therefore, $p * T_{sys}$.

Particularly, if m = 36 with n = 3, the motor driving consists in appling at the 3 phases three shifted samples of 12 samples out of phase each other, i. e., it is necessary to subdivide the motor electrical period in 36 subperiods as equals as possible to each other.

In such a case the committed error in the period reproduction changes in function of the period length $T_c$ and of the used frequency to measure $f_{sys}$ and it is defined by the previously expressed formula:

$$\varepsilon = T_c - m * T_{sys} *INT[INT(T_c/T_{sys})/m]$$

with $\varepsilon$ in a value range $0 < \varepsilon < m\ T_{sys}$.

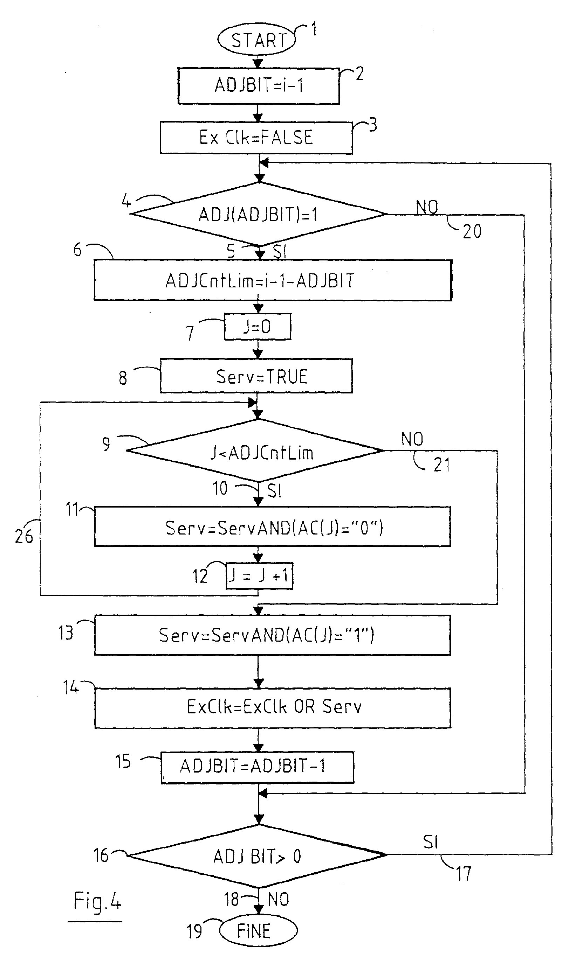

In figure 3 a frequency multiplier circuit for a brushless motor with greater accuracy is shown.

If we interpret the number m of parts in which we want to subdivide the period $T_c$ in the following way:

$$m = j * 2^i$$

where "i" is the maximum exponent that we can give to the factor 2 inside the number m, while j is an odd number also called odd factor.

As shown in such figure we note that by an input terminal In the circuit receives a period signal $T_c$, measured by a positive step period counter CP, formed by "N + i" bit, the counting frequency of which is $f_{cont}$, counting made by the pin Clk; $f_{cont}$ is j times less than a fixed timing frequency $f_{sys}$. The frequency $f_{cont}$ is produced by a block CONT according to prior art.

The content of the counter CP according to the present invention is explainable as the number of time periods $m / T_{sys}$ that passed from the start of the current period.

In fact if we consider for example $m = 48 = 3 * 2^4$, that is j = 3 and i = 4, and considering also $T_{sys} = 80nsec$ and $T_c = 1msec$ we deduce that making the binary division in function of the circuit signal clock, that is in function of $T_{sys}$, we have that $INT[INT(T_c/T_{sys})/m] = 100000100$ and the binary division $INT[INT(T_c/T_{sys})/j] = 1000001000110$, and analyzing this last result unless 4 least significant bits we have the same binary code.

In fact the least significant "i" bits, also called ADJ, represent an error index that we make in the motor driving voltage waveform reproduction.

The "i" bits stored in the vector ADJ are expressible mathematically by a formula such as:

$$ADJ = INT \{r*j^{-1}\}$$

with $r = RESTO \{INT[INT(T_c/T_{sys})/m]\}$, where RESTO (num) is a function that returns the division remainder between two numbers, that is the remainder of the division $INT[INT(T_c/T_{sys})/m]$.

For example, considering the previously given values, we obtain the vector ADJ has a decimal form value equal to 6 and, transforming it in binary digit, formed by 4 bits, we have ADJ = 0110; this number corresponds to the least significant 4 bits of the binary division $INT[INT(T_c/T_{sys})/j]$, previously explained.

Therefore what the circuit makes is a division for a number j of a beforehand known fixed frequency $f_{sys}$, that is $f_{sys}/j$. This frequency is measured by a counter formed by "N+i" bits. In the most significant N bits of the counter CP there is an outcome equal to the outcome of the frequency counting $f_{sys}/m$ according to the prior art. In the least significant "i" bits of said counter CP there is an error index that we make in the driving voltage waveform reproduction.

The value stored in CP is evaluated again continuously with the signal $T_c$ by a pin Reset, so to form the period $T_c$ that will be output, by a pin Out, and stored in a period register RP, having the same dimension of the counter CP, when the new signal $T_c$ arrives, by a pin Latch. The register RP is a storing device such as a flip - flop of D type.

A subperiod positive-step counter CSP has a counting frequency equal to the fixed frequency $f_{sys}$, by a pin Clk, and it is suitable for subperiod counting, making the time digitalization of the motor driving voltage approximation and it is reset, by the pin Reset, in function of the outgoing value of the logic gate OR, as result of the combination between the signal $T_c$ and a calculated frequency of a comparator circuit CMP, called $f_{scan}$, where $f_{scan}$ is a frequency m - times bigger than the signal $T_c$.

The counter outgoing CSP is the input of the comparator block CMP, by the pin In2, that creates as outgoing signal said frequency $f_{scan}$ if the value stored in said counter CSP is bigger than or equal to the value on the pin In1.

In order to determine the input value of the comparator CMP a further positive step counter called AC, formed by "i" bits, having a counting frequency equal to $f_{scan}$, by the pin Clk, is necessary. The counter AC is reset, by the pin Reset, by the signal $T_c$ and it outputs, by the pin Out, the subperiods number present in a period $T_c$.

Moreover said counter AC starts again to count from 0 after having reached the maximum possible value.

Moreover a logic gate block AAA has in input, by the pin In1, the "i" bits of the register RP, and it has an outgoing pin Out2 for the only "i" bits representing the vector ADJ, that is the bits representing the error dimension, and it has in input the value stored in the register AC, that is the number associated to the generic subperiod forming the period $T_c$. The block AAA gives as an output, by the pin Out, a true/false value (1/0) depending on a function able to realize any signal clock distribution, i.e., able to add or not a signal clock at every subperiod.

For example the block AAA can realize a distribution function so that if the stored value of the block AC is less than the value of the vector ADJ the block AAA gives a signal clock to the first ADJ every $2^i$ subperiods, with ADJ = INT $\{r*j^{-1}\}$.

In this way the first ADJ every $2^i$ subperiods forming the period to be measured are more spaced so as to reduce the error s.

The outgoing value from said block AAA is added, by an adder node SUM, to the value stored in the most significant bits of the register RP and the value of said sum is the input signal for the comparator CMP. The comparator CMP compares the instantaneous values of the counter CSP with the values given by the sum of what is stored in the most significant bit of the register RP plus the values of the block AAA, therefore the comparator CMP generates the signal $f_{scan}$ that represents therefore the new reference for the motor rotor position.

In this way, by adding every $2^i$ subperiods a number ADJ of signals clock, each one having a length of $T_{sys}$, we obtain a sampling error given by the formula:

$$\varepsilon = T_c - m * T_{sys} * INT[INT(T_c / T_{sys})/m] - j * ADJ * T_{sys}$$

with $\varepsilon$ in a value range $0 < \varepsilon < j * T_{sys}$, with $j * T_{sys} < m * T_{sys}$.

With the aforementioned values the error in the present invention is in a value range between $0 < \varepsilon < 240$ nsec, while with the embodiment of figure 2 the error is in a value range between $0 < \varepsilon < 3480$ nsec, that is a range value considerably more reduced.

We obtain better results, that is a smaller error s, if the factor 2 has an enough high exponent.

According to the present invention, therefore, the circuit makes, for example, a distribution of additional signals clock in the first ADJ subperiods every $2^i$ making $\varepsilon$ smaller, improving considerably the reproduction precision.

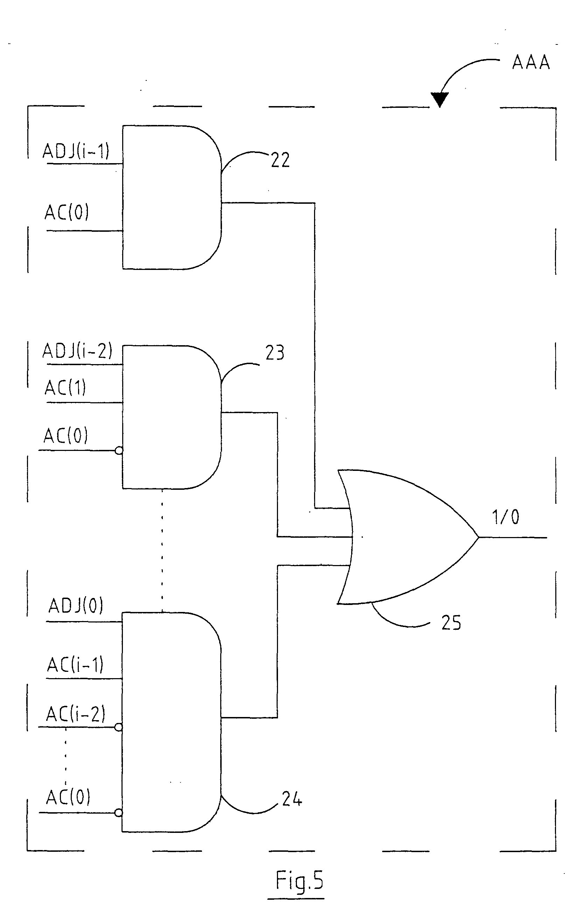

In a particular embodiment the Applicant has found that we can get a higher distribution uniformity of the additional signals clock using the information stored in the vector ADJ, formed by "i" bits, and by the counter value AC, also formed by "i" bits, so to realize a distribution function adapted to add signal clocks to the subperiods according a scheme hereinafter described in the flow chart of Figure 4 and in a schematic circuit of Figure 5.

In Figure 4 a flow chart is shown, describing the block implementation AAA of the circuit of Figure 3.

As shown in such Figure we note a starting block 1 called START and two allocation blocks 2 and 3. The block 2 gives the variable ADJBIT a value equal to "i-1" with "i" being the bit number deduced by the formula m = j * $2^i$, while the block 3 gives a variable ExClk the boolean value FALSE. The variable ExClk, at the end of the analyzing process of every bits, is explainable as the outgoing signal, by the pin Out, from the logic gate block AAA shown in Figure 3 or also as the outgoing of the circuit shown in Figure 5.

Afterwards a test 4 is performed to verify if the vector value ADJ in position ADJBIT is equal to 1, that is if the bit in given position ADJBIT is one or is a zero. In the affirmative case, path 5, the assignment "i - 1-ADJBIT", block 6, to a variable ADJCntLim is performed.

Moreover two assignment blocks 7, wherein an index j is set to zero, and 8, wherein a temp variable Serv is set to a boolean value TRUE, are performed.

Moreover a further test 9 is performed to verify if the index value j is less than the variable value ADJCntLim. In the affirmative case, path 10, an AND operation between the variable Serv and the counter value AC in position j is performed, that is the variable Serv is equal to 1 if the bit in position "j" of the counter AC is 0.

Afterwards a unit increment operation of the index j, block 12 and moreover, path 26, a further test cycle 9 is performed. In the case the test 9 is negative, path 21, that is in the occurrence that the index j is greater than the variable value ADJCntLim, a block 13 is performed wherein an AND operation is performed between a boolean value (true/false) and the condition result $AC(j) = 0$, that is we have that the variable Serv is equal to 1 if the bit in the position "j" of the counter is 1.

Afterwards an assignment block 14 is performed, wherein an OR operation is performed between the variables ExClk and Serv, that is we decide if we give an additional signal clock or not, outputting from the block AAA of figure 3 a high value, that is 1.

Moreover an assignment block 15 is performed, wherein we decrease by a unit the variable value ADJBIT and subsequently a test 16 is performed on said variable ADJBIT. If the result is positive, path 17, the test 4 is processed again, while if the result is negative, path 18, the flow chart ends.

The block 15 is performed immediately after the test 4 in the case of the test result is negative, path 20, that is the case of the vector ADJ in position ADJBIT is different from 1.

It is possible to obtain a signal clock complementary distribution having analogous property by changing in the assignment blocks 11 e 13 the condition to which AC(j) must to be submitted, that is $AC(j) = 1$ in the block 11 and $AC(j) = 0$ in the block 13.

The block AAA has, therefore, as input the counter AC and the vector bit ADJ and it gives as output a value true/false (1/0), that is the variable ExClk, according to a circuit, described in a schematic way in Figure 5, according to the most significant bit of the "i" bits.

In fact the flow chart of Figure 4 according to the most significant bit of the "i" bits of the vector ADJ, vector symbolizing the reference and therefore constant during the whole period $T_c$, and according to the counter value AC, that changes at every subperiod, uses the most significant bit of ADJ, that is the necessity to add a signal clock to the half of subperiods, choosing indifferently the even subperiods of AC (least significant bit equal to 0) or the odd subperiods of AC (least significant bit equal to 1). The second most significant bit of the "i" bits is the necessity to add a signal clock to a quarter of subperiods of AC, choosing indifferently among previously not observed even (least significant bit 0 and second least significant bit 1) or odd subperiods (least significant bit 1 and second least significant bit 0). We can iterate this method for all the bits of counter AC.

For example, in the first cycle of the flow chart, being AC a counter formed by "i" bits that counts the subperiods from zero to period start and that starts again from zero every time the saturation is reached, if the most significant bit of ADJ is equal "1", it means that at least half of the subperiods must be the additional signal clock and therefore we can add at every odd subperiod a signal clock, that it can be distinguished by the fact that the least significant bit of the counter AC is equal to 1.

At the second cycle of the flow chart, if the second least significant bit of ADJ is equal "1", it means that at least a quarter of the subperiods must be the additional signal clock and therefore we can add the signal clock to the even subperiods (that aren't called in the previous cycle) and that they aren't multiple of $2^2$; these subperiods are distinguished by the following features: in the counter AC the least significant bit is equal "0", while the second least significant bit is equal "1".

At the third cycle of the flow chart, if the third least significant bit of ADJ is equal "1", it means that at least an eighth of the subperiods must be the additional signal clock and therefore we can add the signal clock to the even subperiods that are multiple of $2^2$ (that they aren't called in the previous cycle) but aren't multiple of $2^3$; these subperiods are distinguished by the following features: in the counter AC the least significant bit is equal "0", the second least significant bit is equal "0", while the third least significant bit is equal "1".

This process can be iterated for the entire counter AC and in the vector ADJ formed by "i" bits, to the end of the bits.

In Figure 5 a schematic embodiment of the flow chart of Figure 4 is shown.

As shown in such Figure we note a plurality "i" of AND logic gates 22, 23 e 24, wherein "i" is an index deduced by the formula $m = j * 2^i$, and their outgoing signal is the input of an OR logic gate 25. The logic gate 22, for example, outputs a value that is high only if both inputs are high, that is in the case of the vector value ADJ, in position "i - 1", that is the most significant bit, and the counter value AC, in position zero, that is the least significant bit, are equal to 1. That is the most significant bit of the vector ADJ is equal to 1 and the least significant bit of the counter AC is equal to 1 and therefore, for example, at least the half of the subperiods must be a signal clock and we can add this signal clock an high value at every odd subperiod outputting from the logic gate 25.

Analogous argument worthies for the logic gates 23 e 24.

**Claims**

1. Method for the uniform distribution of additional signal clocks, comprising the following steps:

   a1) associating a binary number to every subperiod in a period ($T_c$);
   b1) establishing the signal clock number to be added to the subperiods inside a period ($T_c$);
   c1) evaluating the most significant bit in an vector (ADJ);
   d1) evaluating the least significant bit in a counter (AC);
   e1) adding the signal clock to the half of subperiods if the most significant bit in said vector (ADJ) is equal to 1 and if the least significant bit in said counter (AC) is equal to 0.

**2.** Method according to the claim 1, **characterised in that** it comprises the following steps:

a2) evaluating the second most significant bit in said vector (ADJ);
b2) evaluating the least significant bit and the second least significant bit in said counter (AC);
c2) adding the signal clock to the quarter of subperiods, not contemplated in the step e1), if the second most significant bit in said vector (ADJ) is equal 1, if the least significant bit in said counter (AC) is equal 1 and if the second least significant bit in said counter (AC) is equal to 0.

**3.** Method according to anyone of the previous claims, **characterised in that** it comprises the following steps:

a3) evaluating the third most significant bit in said vector (ADJ);
b3) evaluating the least significant bit, the second least significant bit and the third least significant bit in said counter (AC);
c3) adding the signal clock to the eighth of subperiods, not contemplated in the step c2), if the third most significant bit in said vector (ADJ) is equal 1, if the least significant bit in said counter (AC) is equal 1 and if the least significant bit in said counter (AC) is equal to 1, if the second least significant bit in said counter (AC) is equal to 1 and if the third least significant bit in said counter (AC) is equal to 0.

**4.** Method according to anyone of the previous claims, **characterised in that** a signal clock is added to the half of subperiods if the zero values are changed with the one values in said counter (AC) and viceversa.

**5.** Method according to anyone of the previous claims, **characterised in that** said binary number of step a1) is in a value range between 0 and $2^i$, where i is deduced from the formula $m = j * 2^i$, m being a sub-period number in which a period ($T_c$), j an odd number, i the maximum exponent giving to the factor 2 inside the number m, is to be subdivided.

**6.** Method according to anyone of the previous claims, **characterised in that** said vector (ADJ) is the reference during the whole period ($T_c$).

**7.** Method according to anyone of the previous claims, **characterised in that** said counter (AC) increases the value at every subperiod.

Fig.3

Fig.1

EP 1 160 660 A1

f sys

/ m

N bit

Reset

CP1

Tc

Latch

N bit

RP1

N bit

f scan

CMP1

Fig.2

```
        ( START )  1

        ADJBIT=i-1    2

        Ex Clk=FALSE    3

  4
        ADJ(ADJBIT)=1         NO
                                20
  6        5   SI
        ADJCntLim=i-1-ADJBIT

  7    J=0

  8    Serv=TRUE

  9    J<ADJCntLim          NO
                              21
      10    SI
  11
       Serv=ServAND(AC(J)="0")
 26

      12   J = J +1

  13   Serv=ServAND(AC(J)="1")

  14   ExClk=ExClk OR Serv

  15   ADJBIT=ADJBIT-1

  16   ADJ BIT> 0            SI
                              17
      18    NO

  19   ( FINE )
```

Fig.4

AAA

ADJ(i-1)
AC(0)
22

ADJ(i-2)
AC(1)
AC(0)
23

ADJ(0)
AC(i-1)
AC(i-2)
AC(0)
24

25

1/0

Fig.5

## EUROPEAN SEARCH REPORT

European Patent Office

Application Number

EP 00 83 0397

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BOUTIN N ET AL: "A NOVEL DIGITAL FREQUENCY MULTIPLIER" IEEE TRANSACTIONS ON INSTRUMENTATION AND MEASUREMENT,US,IEEE INC. NEW YORK, vol. IM-35, no. 4, PART 02, 1 December 1986 (1986-12-01), pages 566-570, XP000649634 ISSN: 0018-9456 * paragraph 'OOII! * | 1-7 | G06F7/68 |
| A | GB 2 239 115 A (PHILIPS ELECTRONIC ASSOCIATED) 19 June 1991 (1991-06-19) * page 6, line 8 - page 7, line 9 * | 1-7 | |
| A | US 4 896 338 A (ROUILLET ANDRE ET AL) 23 January 1990 (1990-01-23) * column 7, line 21 - column 9, line 20 * | 1-7 | |
| | | | TECHNICAL FIELDS SEARCHED (Int.Cl.7) |
| | | | G06F |

The present search report has been drawn up for all claims

| Place of search | Date of completion of the search | Examiner |
|---|---|---|
| THE HAGUE | 18 October 2000 | Cohen, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**          EP 00 83 0397

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2000

| Patent document cited in search report | | Publication date | Patent family member(s) | | Publication date |
|---|---|---|---|---|---|
| GB 2239115 | A | 19-06-1991 | NONE | | |
| US 4896338 | A | 23-01-1990 | FR | 2617349 A | 30-12-1988 |
| | | | DE | 3880217 A | 19-05-1993 |
| | | | DE | 3880217 T | 29-07-1993 |
| | | | EP | 0298804 A | 11-01-1989 |

EPO FORM P0459

For more details about this annex : see Official Journal of the European Patent Office, No. 12/82